# Europäisches Patentamt

## European Patent Office

## Office européen des brevets

(19)

(11) Veröffentlichungsnummer: **0 199 772**

**B1**

(12)

# EUROPÄISCHE PATENTSCHRIFT

(45) Veröffentlichungstag der Patentschrift:
21.09.88

(51) Int. Cl.⁴: **G 01 L 9/06**

(21) Anmeldenummer: **85905392.8**

(22) Anmeldetag: **28.10.85**

(86) Internationale Anmeldenummer:
**PCT/DE 85/00418**

(87) Internationale Veröffentlichungsnummer:
**WO 86/02999 (22.05.86 Gazette 86/11)**

(54) **HOCHDRUCKSENSOR.**

(30) Priorität: **07.11.84 DE 3440568**

(43) Veröffentlichungstag der Anmeldung:
**05.11.86 Patentblatt 86/45**

(45) Bekanntmachung des Hinweises auf die Patenterteilung:
**21.09.88 Patentblatt 88/38**

(84) Benannte Vertragsstaaten:
**DE FR GB IT SE**

(56) Entgegenhaltungen:
**DE-A-1 932 899
DE-A-3 125 640
FR-A-2 142 465
GB-A-966 527
GB-A-981 793
US-A-4 068 206**

**Electronic Engineering, Jahrgang 53, Heft 659, November 1981, London (GB) E. Bose: "Fluid pressure transducers"**

(73) Patentinhaber: **ROBERT BOSCH GMBH, Postfach 50, D-7000 Stuttgart 1 (DE)**

(72) Erfinder: **GROB, Alfred, Panoramastrasse 23, D-7141 Oberstenfeld (DE)**
Erfinder: **LEIBFRIED, Wolfgang, Obere Burghalde 20, D-7250 Leonberg (DE)**
Erfinder: **RAMPMAIER, Karl, Bauernwaldstrasse 27, D-7000 Stuttgart- Botnang (DE)**
Erfinder: **SPITZENBERGER, Kurt, August- Lämmle-Weg 7, D-7252 Weil der Stadt 2 (DE)**
Erfinder: **STECHER, Günther, Seestrasse 64, D-7140 Ludwigsburg (DE)**
Erfinder: **STEINLE, Klaus, Eschenbrünnlestrasse 90, D-7032 Sindelfingen (DE)**
Erfinder: **WALTER, Heinz, Blumenstrasse 41, D-7255 Rutesheim (DE)**
Erfinder: **ZIMMERMANN, Herbert, Lindenweg 3, D-7149 Freiberg (DE)**

EP 0 199 772 B1

## Beschreibung

### Stand der Technik

Es gibt Sensoren, die nach dem Prinzip der Dehnungsmeßstreifen arbeiten. Bei Hochdrucksensoren führt dies aber zu vielen Problemen, die sich vor allem auf die Langzeitgenauigkeit und die Langzeitstabilität der Sensoren beziehen: Ermüdung der Unterlage, der Einspannung, der Grenzschicht zwischen Dehnungsmeßstreifen und Unterlagen, Ermüdung der elektrischen Kontakte und andere.

### Vorteile der Erfindung

Der erfindungsgemäße Hochdrucksensor nach dem Anspruch 1 hat demgegenüber den Vorteil, daß ein piezoresistives Sensorelement verwendet wird, das direkt auf Druckänderungen des Druckübertragungsmediums anspricht. Damit kann die Signalerzeugung von der mechanischen Ankoppelung des Sensorelements an den Hochdruckraum abgetrennt werden. Dadurch ergeben sich neue Freiheitsgrade für die Bereitstellung von Sensorelementen und für ihren konstruktiven Einsatz, der dadurch sehr flexibel gehandhabt werden kann. Der Hochdrucksensor ist einfach herzustellen, gewährt eine hohe Lebensdauer und stellt eine Scheibe mit ebener Oberfläche dar, so daß er problemlos einzubauen ist.

Durch die in den abhängigen Ansprüchen aufgeführten Maßnahmen sind Weiterbildungen der im Anspruch 1 angegebenen Merkmale möglich.

### Zeichnung

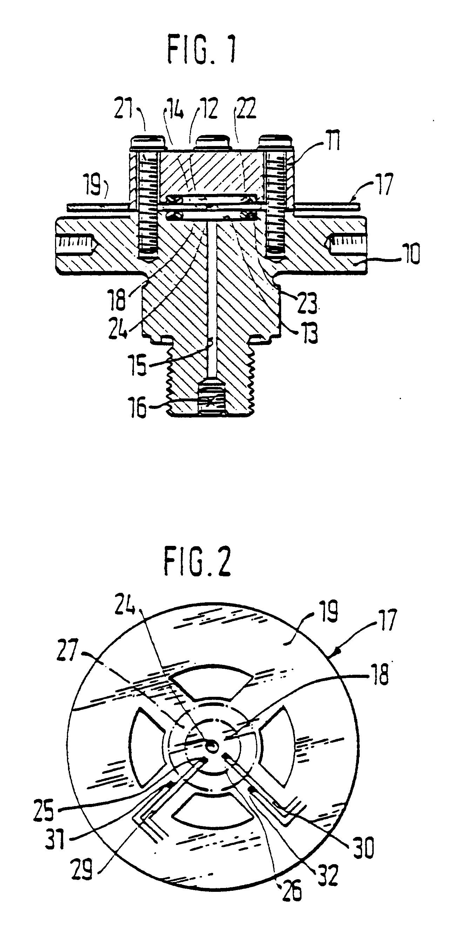

Ein Ausführungsbeispiel der Erfindung ist in der Zeichnung dargestellt und in der nachfolgenden Beschreibung näher erläutert. Es zeigen Figur 1 einen Längsschnitt durch einen Hochdrucksensor, Figur 2 eine Sensorscheibe.

### Beschreibung des Erfindungsbeispiels

Der Hochdrucksensor weist ein Gehäuseunterteil 10 auf, das durch einen Deckel 11 verschlossen ist. An den einander gegenüberliegenden Stirnseiten von Gehäuseunterteil 10 und Deckel 11 ist jeweils ein zylindrischer Raum 12 bzw. 13 ausgebildet, wodurch sich nach Zusammenbau der Teile ein zylindrischer Druckraum 14 ergibt. Von diesem führt eine Längsbohrung 15 zum Äußeren des Gehäuses, in der eine Drossel 16 angeordnet ist.

Zwischen Gehäuseunterteil 10 und Deckel 11 befindet sich eine runde Sensorscheibe 17, die einen inneren Bereich 18 aufweist, welcher im Druckraum 14 liegt, sowie einen Bereich 19, welcher außerhalb der Gehäuseteile liegt. Wie die Figur 2 zeigt, sind in der Sensorscheibe 17 mehrere Durchbrüche ausgebildet, durch welche weiter nicht dargestellte Stege des Deckels zum Gehäuseunterteil hindurchdringen, sowie mehrere Befestigungsschrauben 21, mit welcher die Teile zusammengehalten sind. Der innere Bereich 18 der Sensorscheibe 17 ist durch Dichtringe 22 und 23 nach außen hin abgedichtet. Die Scheibe 17 weist in ihrer Mitte eine durchgehende Bohrung 24 auf, wodurch Druckausgleich im Druckraum 14 geschaffen ist.

Die Sensorscheibe 17 besteht zweckmäßigerweise aus Stahl, auf der sich - wie Figur 2 zeigt - im inneren Bereich 18 einer oder mehrere Meßfühler 25, 26 in Form piezoresistiver Schichtwiderstände befinden. Der strichpunktierte Bereich 27 der Sensorscheibe stellt den Dichtbereich dar, d. h. den Bereich, in dem die Dichtringe 22, 23 liegen. Von den Meßfühlern 25, 26 führen Schicht-Leiterbahnen 29, 30 in den äußeren Bereich 19, in dem sich Ergänzungswiderstände 31, 32 sowie Auswerteschaltungen und Auswerteelektronik, Anschlußstecker usw. für die Meßfühler befinden. Die Widerstände und Leiterbahnen sind alle sehr flach ausgebildet und mit Deckschichten versehen, die vorwiegend aus Gläsern bestehen. Die Gläser schützen die Sensorwiderstände und die übrigen Schaltungsteile vor allen Umgebungseinflüssen und erzeugen eine so ebene, glatte und druckfeste Oberfläche, daß eine relativ einfache und problemlose Hochdruckabdichtung durch die Dichtringe 22, 23 erzielt wird. Die Meßfühler 25, 26 im Druckraum 14 sind allseitig vom Druckmedium umschlossen und sprechen direkt auf dessen Druckänderungen an. Eine primäre Verformung der Scheibe zur Signalerzeugung ist hier im Gegensatz zu Dehnungsmeßstreifen nicht erforderlich. Der Druckraum 14 wird beaufschlagt über die Bohrung 15, wobei die Drosseln 16 als Dämpfdrossel dient.

Mit der erfindungsgemäßen Ausbildung kann die Signalerzeugung von der mechanischen Ankopplung des Meßfühlers an den Hochdruckraum getrennt werden. Damit werden neue Freiheitsgrade für die Entwicklung und Anwendung von Sensorelementen und für ihren konstruktiven Einsatz eröffnet. Die Herstellung der Sensorscheibe ist relativ einfach, kostengünstig, sehr zuverlässig und erlaubt den Einbau miniaturisierter Sensoren auf sehr kleinem Raum mit vielen möglichen Einbaugeometrien. Es ist auch eine einfache Herstellung von Mehrfachsensoren auf engstem Raum möglich. Damit kann die Genauigkeit und Zuverlässigkeit solcher Sensoren noch weiter gesteigert werden.

**Patentansprüche**

1. Hochdrucksensor zum Erfassen von Flüssigkeitsdrücken durch direkte Verformung von piezoresistiven Schichtwiderständen (25, 26) in einem Hochdruckraum (14) der Flüssigkeit, mit einer Scheibe (17), von der sich ein mit den piezoresistiven Schichtwiderständen (25, 26) bestückter Bereich (18) abgedichtet im Hochdruckraum (14) befindet, während ein außerhalb desselben liegender Bereich (19) mit Auswerteschaltungen und gegebenenfalls Zubehörgeräten wie Steckern bestückt ist.

2. Sensor nach Anspruch 1, dadurch gekennzeichnet, daß die Scheibe (17) aus Stahl besteht, auf dem die piezoresistiven Schichtwiderstände, sowie Schichtleiterbahnen und Auswerteschaltungen aufgebracht sind und der insgesamt mit einer oder mehreren Lagen aus Glas derart beschichtet ist, daß sich eine ebene Oberfläche ergibt.

3. Sensor nach Anspruch 1 oder 2, dadurch gekennzeichnet, daß der Druckraum (14) in einem von einem Deckel (11) verschlossenen Gehäuseunterteil (10) ausgebildet ist, daß sich in der Mitte der Scheibe eine durchgehende Bohrung (24) zwecks Druckausgleich befindet und daß sich am Rand des Druckraums beidseitig der Scheibe Dichtringe (22, 23) befinden.

4. Sensor nach Anspruch 3, dadurch gekennzeichnet, daß die Scheibe etwa in ihrem mittleren Bereich mehrere konzentrisch verlaufende Schlitze aufweist, durch welche Stege des Deckels (11) sowie Schrauben (20) hindurchtreten.

5. Sensor nach Anspruch 3 oder 4, dadurch gekennzeichnet, daß in den Hochdruckraum (14) eine im Gehäuseunterteil (10) verlaufende Längsbohrung (15) eindringt, in der eine Drossel (16) angeordnet ist.

**Claims**

1. High-pressure sensor for detecting fluid pressures by direct deformation of piezo-resistive film resistors (25, 26) in a high-pressure space (14) of the fluid, having a disc (17) of which an area (18) equipped with the piezo-resistive film resistors (25, 26) is located sealed in the high-pressure space (14) whilst an area (19) located outside the latter is equipped with evaluating circuits and possibly accessory devices such as plugs.

2. Sensor according to claim 1, characterized in that the disc (17) consists of steel to which the piezo-resistive film resistors and film conductor tracks and evaluating circuits are applied and which overall is covered with one or several layers of glass in such a manner that a level surface is produced.

3. Sensor according to claim 1 or 2, characterized in that the pressure space (14) is constructed in a lower housing part (10) which is closed by a cover (11), that a through hole (24) is located in the centre of the disc for the purpose of pressure equalisation and that sealing rings (22, 23) are located on both sides of the disc at the edge of the pressure space.

4. Sensor according to claim 3, characterized in that the disc exhibits approximately in its central area several concentrically extending slots through which ribs of the cover (11) and screws (20) penetrate.

5. Sensor according to claim 3 or 4, characterized in that a longitudinal hole (15), in which a throttle (16) is arranged and which extends in the lower housing part (10) penetrates into the high-pressure space (14).

**Revendications**

1. Sonde pour haute pression pour capter des pressions de liquides par déformation directe de résistances à couches piézorésistives (25, 26) dans une chambre à haute pression (14) du liquide, sonde comportant un disque (17) dont une zone (18) pourvue des résistances à couches piézorésistives (25, 26) se trouve, étanchée, dans la chambre à haute pression (14), tandis qu'une zone (19) située à l'extérieur de celle-ci est pourvue de circuits d'évaluation et éventuellement d'appareils auxiliaires tels que des connecteurs.

2. Sonde selon la revendication 1, caractérisée en ce que le disque (17) est exécuté en acier, sur lequel sont appliquées les résistances à couches piézorésistives, ainsi que les bandes conductrices à couches et les circuits d'évaluation, et qui est recouvert en totalité d'une ou plusieurs couches en verre de telle manière, qu'il se présente une surface extérieure plane.

3. Sonde selon la revendication 1 ou 2, caractérisée en ce que la chambre de pression (14) est exécutée dans une partie inférieure (10) du boîtier fermée par un couvercle (11), en ce que, au centre du disque est ménagé un alésage continu (24) en vue d'équilibrer la pression, et en ce que des bagues d'étanchéité (22, 23) sont disposées au bord de la chambre de pression des deux côtés du disque.

4. Sonde selon la revendication 3, caractérisée en ce que le disque comporte à peu près dans sa zone médiane plusieurs fentes s'étendant concentriquement, à travers lesquelles passent des traverses du couvercle (11) ainsi que des vis (21).

5. Sonde selon la revendication 3 ou 4, caractérisée en ce que dans la chambre à haute pression (14) pénètre un alésage longitudinal (15) s'étendant dans la partie inférieure (10) du boîtier, et dans lequel est ménagé un étranglement (16).

# FIG. 1

# FIG.2